(19) **Europäisches Patentamt**

**European Patent Office**

**Office européen des brevets**

(11) **EP 0 924 176 B1**

(12) **FASCICULE DE BREVET EUROPEEN**

(45) Date de publication et mention
de la délivrance du brevet:
**25.08.2004 Bulletin 2004/35**

(51) Int Cl.⁷: **C05D 3/02**, C05G 3/00

(21) Numéro de dépôt: **98204211.1**

(22) Date de dépôt: **11.12.1998**

(54) **Amendement basique pour les sols**

Basisches Bodenverbesserungsmittel

Basic soil amendment

(84) Etats contractants désignés:
**BE DE DK ES FR GB NL**

(30) Priorité: **18.12.1997 FR 9716426**

(43) Date de publication de la demande:
**23.06.1999 Bulletin 1999/25**

(73) Titulaire: **Groupe Meac S.A.S.**
**28190 Saint Georges sur Eure (FR)**

(72) Inventeur: **Chantegret, Charles**
**51100 Reims (FR)**

(74) Mandataire: **Richebourg, Michel François**
**Cabinet Michel Richebourg,**
**"Le Clos du Golf",**
**69, rue Saint-Simon**
**42000 Saint Etienne (FR)**

(56) Documents cités:
**EP-A- 0 634 380**      **DE-A- 3 628 611**
**GB-A- 2 209 744**

## EP 0 924 176 B1

**Description**

La présente invention concerne le secteur technique de l'agriculture et plus précisément utilisation d'un amendement basique pour le sol.

Les amendements peuvent être classés en trois catégories (J.P. Destain et al. Annales de Gembloux - 1986. 92 : 201 - 217) qui sont les chaux vives (CaO et MgO), les chaux hydratées (Ca(OH$_2$) et Mg(OH)$_2$) ou produits cuits et les carbonates ou produits crus (CaCO$_3$ et MgCO$_3$) et les formes silicatées de calcium. Selon ce document belge, la valeur neutralisante des carbonates (craie) est de 35 par exemple avec une exigence de finesse de "90 à 0,15 mm" (c'est-à-dire 90 % de particules passant au tamis de 0,15 mm).

On a pensé à utiliser des suspensions de CaCO$_3$ en agriculture, comme amendements de sols mais ces applications ne donnent pas lieu à des développements durables ; il existe d'ailleurs des normes françaises, comme la norme NF U44-001 de juillet 1988. Les produits utilisés présentent habituellement une solubilité carbonique de 60 à 70 (cf. norme NF U44-174) qui apprécie une "réactivité agronomique", et une finesse de l'ordre de 80 % à 80 microns, voire plus grossière (80 % à 10 mm).

Les problèmes liés à ces utilisations sont essentiellement liés à l'insuffisance de l'efficacité au sol, des qualités d'assimilation par les végétaux, par rapport à la chaux qui, dans ce domaine, reste la référence. On connaît naturellement les inconvénients de l'emploi de produits pulvérulents, sensibles au vent, créant des poussières, et de dosage imprécis. L'emploi de liquides a apporté une amélioration dans ce domaine, mais l'efficacité ou l'assimilation reste médiocre et la précision de dosage encore trop faible, de plus la formulation jusqu'à présent préparée ne présentait pas des garanties de stabilité suffisante.

Il existe donc un besoin en amendement basique liquide présentant notamment une meilleure efficacité au niveau du sol, et si possible une meilleure assimilation par les végétaux ainsi que des avantages d'utilisation. Il existe également un besoin en de tels amendements basiques qui présenteraient de plus des avantages supplémentaires par rapport à l'art antérieur. De tels avantages consisteraient par exemple à s'affranchir de la contrainte d'épandage, en couplant ou associant l'apport en amendement basique avec d'autres apports, comme le lisier et autres. Cependant, la compatibilité avec de tels autres apports n'était pas assurée.

La présente invention propose un amendement qui, de manière surprenante, présente un tel ensemble d'avantages et est donc de très grand intérêt pour l'agriculture.

Les premiers amendements basiques ont été réalisés par voie sèche, sous forme de poudres ou granulés ou autres, avec de très nombreux inconvénients comme la grande sensibilité au vent, l'imprécision de l'application et du dosage, des risques de pollution, et une efficacité à la fois relativement faible et surtout très lente. En particulier, la lenteur de l'effet sur les sols et les plantes fait que la gestion et la prévision des cultures, ainsi que des doses à appliquer, est très contraignante.

Un premier progrès a été réalisé par les amendements liquides, généralement sous forme de suspensions.

L'article de Gary. W. Colliver dans Crops and Soils Magazine / August-September 1979 "Liquid Lime" page 14 décrit l'emploi d'un "nouveau concept" d'amendement basique par voie liquide en remplacement de la voie pulvérulente. Les particules appliquées sont qualifiées de "fines" mais situées habituellement entre "100 et 200 mesh", soit entre 74 et 149 microns.

On sait également appliquer sur le sol des suspensions de carbonate de calcium finement divisé, selon notamment K.T. Winter et al., Soil Sci.-Soc. Am. J. Vol. 45, 1981, page 1224. Ce document ne précise aucunement la granulométrie employée, et l'on doit donc en déduire qu'il s'agit de celle qui était habituellement utilisée en 1981, donc comparable à celle décrite en 1979 par Gary Colliver, et confirmée par les autres documents cités ci-dessous, donc de l'ordre de 100 microns ou plus. D'autre part, l'application envisagée est limitée à un contrôle du pH. Ce problème est totalement différent de ceux posés par l'amendement des sols dont l'une des finalités essentielles est l'efficacité en terme d'action sur le sol (matérialisée par la remontée du pH), l'assimilation par la plante et l'amélioration de la stabilité structurale des sols.

Le brevet GB 2 283 014 de 1993 décrit l'emploi comme agents de conditionnement du sol de mélanges comprenant du carbonate de calcium de granulométrie inférieure à 75 microns ce qui confirme que, dans l'état actuel de la technique, les granulométries n'ont pas évolué par rapport à 1979 ou 1981.

Cette absence d'évolution n'est d'ailleurs que le reflet de la norme précitée, selon laquelle l'amendement dit "pulvérisé" est défini comme correspondant à plus de 80 % passant au tamis de 0,315 mm, soit 315 microns, ordre de grandeur caractérisant bien l'art antérieur.

Le document DE 36 00 400 de 1983 décrit une suspension recyclée en lit fluidisé, comme amendement de sol, avec une dimension de particules inférieure à 0,2 mm soit inférieure à 200 microns.

Le brevet US 4,089,669 décrit des suspensions de carbonate pour la neutralisation des sols, de granulométrie comprise entre 80 et 20 mesh soit de l'ordre de 177 à 84 microns.

Le brevet DE 37 14 444 de 1987 décrit un mélange, qualifié d'essentiel, de 50 % de CaCO$_3$ et 50 % de MgCO$_3$, pour lutter contre l'acidification des eaux naturelles des sols forestiers et des forêts, avec une granulométrie "inférieure à 30 microns".

Le brevet DE 41 42 627 décrit des engrais calcaires de granulométrie comprise entre 0 et 3 mm avec 70 % au dessous de 1 mm.

L'ensemble de ces données est donc cohérent autour de valeurs de granulométrie se situant entre 300 ou 200 et 75 microns, en tout cas de l'ordre de plusieurs dizaines de microns, pour les applications en amendement de sols, et légèrement inférieure, de l'ordre de inférieur à 50 ou inférieur à 30 microns mais dans une application totalement différente de l'amélioration du pH dans la masse des sols agricoles.

On connaît encore le document DE 36 28 611 A qui enseigne des applicatons par pulvérisation, pour lutter contre les effets des pluies acides. La première pulvérisation (poudre) a lieu « avant la fonte des neiges » et une seconde pulvérisation a lieu en automne avant la chute des feuilles.

On connaît encore le document EPA 0 634 380 qui décrit également un traitement « directement en application foliaire », et qui précise que la composition est absorbée par l'épiderne de la feuille. Ce document indique que « le traitement des végétaux en application foliaire ne peut être comparé à la fertilisation des sols en vue d'une absorption radiculaire active des produits fertilisants ».

Selon l'invention, on effectue une rupture avec l'art antérieur et on préconise comme amendement basique liquide pour les sols un produit comprenant une suspension aqueuse de matière minérale extrêmement fine, de granulométrie correspondant à un diamètre médian de particule inférieur à 10 microns.

De préférence, le diamètre médian sera inférieur à 7 microns, de manière encore préférée inférieur à 5 microns, et le mode de réalisation préféré est une suspension aqueuse stable de particules ayant un diamètre médian de 3 microns.

On aurait pu craindre des problèmes liés à la grande finesse, comme par exemple les risques d'augmentation de la viscosité avec colmatage des médians de pompage, buses et analogues, difficulté de nettoyage du matériel, etc.... Ces problèmes ne se produisent pas avec la formulation selon l'invention.

La Demanderesse a constaté que cette caractéristique de très grande finesse conduit à des valeurs très nettement améliorées des paramètres pris en considération en agriculture, notamment de remontée du pH dans la masse du sol (à ne pas confondre avec la propriété très différente de modification du pH en surface du sol utilisée pour la levée des petites graines) et d'amélioration du calcium échangeable dans les sols, ainsi qu'à l'amélioration de la dynamique d'échange et des caractéristiques d'assimilation par les plantes (qui est un critère particulièrement important pour les plantes fourragères).

Ce critère de réactivité agronomique peut être estimé par le rapport **A** entre l'évolution mesurée du calcium assimilé par le sol, c'est-à-dire échangeable, et l'évolution attendue du calcium, selon la formule suivante:

$$A = 100 \times \frac{\text{(ppm de CaO échangeable final - ppm de CaO échangeable initial)}}{\text{ppm de CaO attendu selon la dose apportée}}$$

Le critère de "réactivité agronomique" mesuré au champ est apprécié par la solubilité carbonique définie selon la norme NF U44-174 et la norme NF U 44-001 en laboratoire.

Les produits habituels correspondent à des valeurs de solubilité carbonique de 60 à 70, voire moins, pour une finesse habituelle de 80 % à 80 microns, jusqu'à 80 % à 315 microns ou encore plus grossière.

On connaît par exemple un produit commercial dont la granulométrie est de environ 31 % à 315 microns, 50 % à 1 mm et 82 % à 10 mm, dont la valeur neutralisante est de 50 et la solubilité carbonique est qualifiée de "action moyennement rapide" ce qui correspond selon la norme NF U 44-001 à une solubilité carbonique de 20 à 50. La dose conseillée par le fabricant est de 3 à 5 t/ha.

On connaît également des valeurs de 60 à 70 pour le produit RECALCIT™ qui est un produit de granulométrie représentative des produits considérés comme fins dans l'art antérieur.

Selon invention, pour un diamètre médian de 3 microns, la réactivité agronomique passe à plus de 90 % en seulement quelques semaines, ce qui représente un facteur surprenant d'amélioration. Pour mieux faire apprécier ce résultat, on peut signaler que, pour la première fois, un amendement basique à base de $CaCO_3$ présente des propriétés comparables à celles de la chaux CaO. Il est à noter que par composition d'amendement basique selon l'invention à base de $CaCO_3$ il faut entendre des compositions d'amendement basique liquide de matières minérales comprenant du carbonate de calcium naturel tel que la craie, la calcite, le marbre ou autre forme de carbonate de calcium pouvant contenir par exemple des argiles ainsi que de la dolomie ou de leurs mélanges ou bien de l'oxyde de magnésium.

Cette finesse peut être exprimée différemment par la surface spécifique qui, selon l'invention, sera de préférence supérieure à 3 $m^2$/g, ou mieux de 4 à 6 $m^2$/g. On peut même envisager des surfaces spécifiques pouvant atteindre 7 ou 9 $m^2$/g.

Les avantages pour l'agriculture sont :

- un effet sur les sols beaucoup plus rapide ;

- un meilleur équilibre du sol, c'est-à-dire une gamiture optimale du complexe argilo-humique (vérification par l'interprétation des analyses du sol) ;

- une production des cultures beaucoup plus facile à gérer, car l'effet est beaucoup plus rapide; on peut donc accompagner la production presque en temps réel par des mesures de chaulage appropriées, et non plus tenter de deviner l'effet pour déterminer les mesures à prendre, avec de grosses incertitudes comme dans l'art antérieur ;

- une meilleure précision dans le dosage, donc un moindre coût et un risque plus faible de pollution par les éléments indésirables apportés par les sous produits agroalimentaires, le risque de pollution étant l'un des problèmes énoncés par le brevet DE 36 00 400 précité ;

- une efficacité générale beaucoup plus grande, avec un effet déjà perceptible peu après le traitement, et une atteinte de 90 % au terme de déjà 1 à 3 mois au lieu du délai habituel d'attente de 6 mois à trois ans avec les amendements traditionnels. Ceci se manifeste par une remontée du niveau de calcium très rapide, de 1 à 4 mois après l'épandage, contre 6 mois à 3 ans antérieurement.

S'agissant d'un produit liquide, on évite naturellement les inconvénients des poudres précités.

On effectuera avantageusement des associations de $CaCO_3$ ou dolomie ou MgO avec d'autres additifs usuels en agriculture. Notamment, on pourra adjoindre des produits comme $MgCO_3$, les sulfates alcalins ou alcalino-terreux, les sels de potassium et produits analogues et autres adjuvants ayant une fonction spécifique telle que la résistance au gel ou à l'évaporation, la coloration ou la lutte anti-bactérienne ou encore l'apport d'autres fertilisants.

L'homme du métier saura ajuster les propriétés de la composition en fonction du sol, de la plante, des conditions atmosphériques, et du matériel utilisé pour le pompage et l'épandage.

Les doses d'application seront avantageusement de l'ordre de 2 à 6 t/ha, de préférence de 2 à 3 ou 4 t/ha, et mieux encore de l'ordre de 2 t/ha pour 2 à 3 ans en entretien. Il est important de constater que les compositions sont déjà efficaces à une dose aussi faible que 2 ou 3 t/ha, même s'il peut être intéressant, pour des raisons spécifiques au sol traité et à la culture concernée, de porter ce dosage à une valeur supérieure. L'invention permet donc aussi bien une bonne efficacité à un dosage très faible, contrairement à l'art antérieur, que des applications plus intenses dans certains cas particuliers.

Si cela est nécessaire, on pourra utiliser une faible proportion de produit dispersant et/ou agent antisédimentation et autres additifs.

De préférence, l'agent dispersant est choisi parmi les produits exemplifiés dans le Tableau 2 ci-après, et les produits équivalents, et notamment ceux choisis parmi les polymères et copolymères (méth)acryliques et leurs sels, notamment sels sodiques, sels mixtes de calcium ou de magnésium et de sodium, sels d'ammonium ainsi que leurs phosphates.

De préférence, ledit agent anti-sédimentation est choisi parmi les épaississants naturels ou les épaississants synthétiques tels que les copolymères (méth)acryliques associatifs ou non.

Des additifs usuels appropriés seront en outre des agents anti-gel, anti-évaporation, des bactéricides et/ou des agents fertilisants et/ou des colorants synthétiques ou naturels tels que par exemple les pigments minéraux naturels ou encore les colorants alimentaires, tous connus de l'homme du métier.

L'homme du métier comprendra également que les compositions pourront être concentrées dans une certaine mesure pour la livraison, afin d'éviter de transporter une quantité d'eau importante, puis diluées à l'eau avant application. Ici encore, l'homme du métier saura envisager des additifs classiques comme les dispersants, modificateurs usuels de rhéologie, etc....

Il doit être apprécié que l'invention repose sur un nouveau concept général, qui est l'utilisation de $CaCO_3$ extrêmement fin (comme défini ci-dessus et dans les exemples qui suivent), et que les connaissances habituelles de l'homme du métier en matière d'amendement basiques liquides restent valables, avec des variantes qui seront tout à fait à sa portée au moyen d'essais de routine sur site, et à l'exception des résultats qui sont très inhabituels mais qui sont précisés dans la présente demande.

Selon un mode de mise en oeuvre particulièrement apprécié dans certaines régions, on pourra mélanger la composition avec le lisier pour les épandages habituels.

On rappellera brièvement que le lisier est un produit naturel du métabolisme des porcs, bovins et autres animaux. La composition selon n'a pas d'influence sur la dynamique de l'azote, sur les odeurs, ni sur les agents pathogènes, ni le pH.

En revanche, cette variante représente un gain très important en matière d'organisation du travail, d'investissements et de coûts, avec en sus la certitude d'apporter au champ les quantités voulues, avec précision.

On garantit également une efficacité dès la première culture implantée, après 1 à 3 mois au lieu de 6 mois à 3 ans pour les produits antérieurs, même liquides.

D'autres caractéristiques et avantages de l'invention apparaîtront mieux à la lecture de la description qui va suivre, et en se référant au dessin annexé, sur lequel :

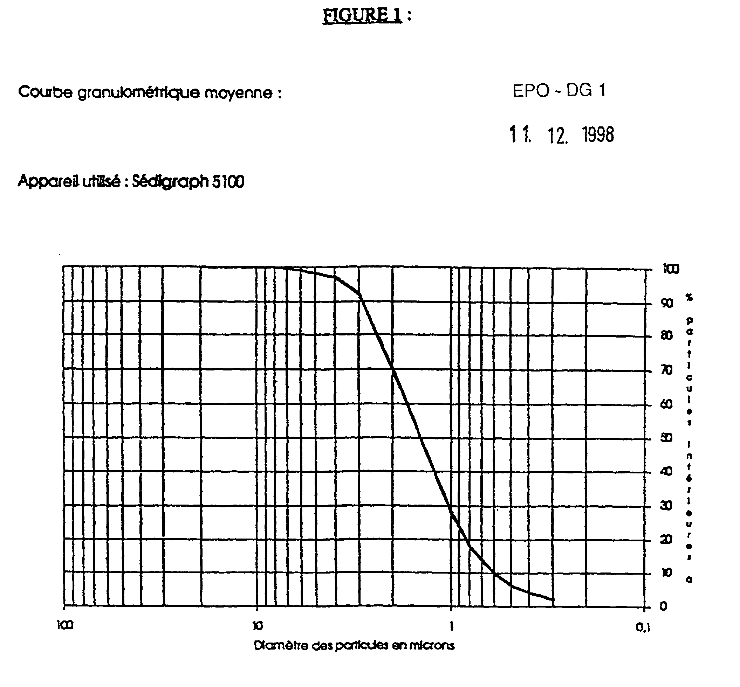

- la figure 1 représente la courbe de granulométrie du produit de l'essai n° 2 qui est une suspension aqueuse stable de carbonate de calcium à 65 % d'extrait sec.

Exemple 1 :

Le produit de base utilisé pour les essais n° 1 à 3 selon l'invention est le produit dont les caractéristiques sont données sur la figure 1. Ce produit comporte des résidus d'adjuvants de broyage, comme notamment des résidus de dispersant, au total moins de 1 % en poids sec.

Sa granulométrie peut être résumée par les données suivantes :

68 % à 2 microns

28 % à 1 micron

80 % à 2,5 microns.

Les conditions d'essai et les résultats d'essais sur les sols sont rassemblés dans le Tableau 1 ci-après. La dose est de 2 t/ha. Le "travail du sol" vise le labour, le sous solage, les rouleaux, le hersage, etc.... de manière connue. L'analyse faite par le laboratoire SAS vise la répartition dans la CEC (capacité d'échange cationique ou "garde-manger") entre le calcium, le magnésium, le potassium, le sodium et l'hydrogène. Lhydrogène est inutile et est cause d'acidité. On va donc chercher à le chasser par l'apport d'amendement. L'évolution des teneurs en calcium est donc corrélative de la remontée du pH des sols. C'est ce critère évolution constatée par rapport à l'évolution attendue qui a donc été utilisé dans le tableau.

L'efficacité du produit a été mesurée à au moins 90 % à trois mois, ce qui est remarquable.

On a préparé des compositions de viscosité compatible avec les équipements utilisés à ce jour en agriculture, soit au maximum de l'ordre de 350 à 600-700 cP, voire 1000 cP.

Les compositions sont stables et sont facilement pulvérisables.

Les solubilités carboniques obtenues se situent au minimum à 90.

- TABLEAU 1 -

| ESSAI n° | | 1 Invention | 2 Invention | 3 Invention | |
|---|---|---|---|---|---|
| CULTURE | | Ray Grass Italien de printemps | Chaume de blé destiné au blé | Chaume de blé destiné à être déchaumé | |
| ETAT INITIAL DU SOL | pH eau<br>ppm CaO échangeable | 4,8<br>880 | 6,4<br>2020 | 6,8<br>2350 | |
| ETAT DU SOL A 3 MOIS | pH eau<br>ppm CaO échangeable | 5,5<br>1805 | 7,0<br>2615 | à 1 mois<br>6,9<br>2470 | à 4 mois<br>7,0<br>2250 |
| CONDITIONS D'ESSAIS | CaO apporté<br>Profondeur du sol<br>Poids de sol<br>Travaux du sol<br>Δ ppm CaO attendu | 2310 CaO<br>15 cm<br>2250 t/ha<br>Aucun<br>1026 | 2310 CaO<br>25 cm<br>3750 t/ha<br>Labour sans travail préalable<br>616 | 700 CaO<br>25 cm<br>3750 t/ha<br>Déchaumage<br>186 | |
| RESULTATS | * Efficacité à 3 mois<br>Δ ppm CaO mesuré<br>Δ pH mesuré | 90 %<br>+ 915<br>+ 0,8 | 96 %<br>+ 595<br>+ 0,6 | à 1 mois : 64 %<br>+ 120<br>+ 0,1 | à 4 mois : 100 %<br>+ 200<br>+ 0,2 |

$$* \text{ Efficacité} = \frac{\text{ppm CaO échangeable à 3 mois - ppm CaO échangeable initial}}{\Delta \text{ ppm CaO attendu}} \times 100$$

On note que la réactivité supérieure du produit est manifeste puisque, même sans travail du sol, l'efficacité est de l'ordre de 90 % à seulement quelques semaines. Au contraire, certains produits représentatifs de l'art antérieur nécessitent un enfouissement dans le sol, et malgré cela procurent une efficacité bien moins bonne (50 % à 6 mois).

Exemple 2 :

On a réalisé plusieurs essais (essais n° 4 à 19) sur le même sol et la même culture que l'essai n° 2 en faisant varier la nature des minéraux utilisés, ainsi que les caractéristiques de leur mise en dispersion, et les additifs utilisés, notamment dispersant et épaississant. On a également réalisé certains essais en incorporant des additifs tels que colorant, bactéricide, agent anti-évaporation, antigel, ou autres fertilisants.

Les propriétés essentielles des compositions ont été mesurées, notamment la viscosité, la solubilité carbonique, la réactivité agronomique, et l'efficacité.

Les résultats ont été rassemblés dans le Tableau 2 ci-après.

## - TABLEAU 2 -

| | | Essai n° | Art antérieur 4 | Invention 5 | Invention 6 | Invention 7 | Invention 8 | Invention 9 | Invention 10 |
|---|---|---|---|---|---|---|---|---|---|
| **COMPOSITION** | Minéral | Nature minéral | Calcite | Craie | Calcite | Calcite | Calcite | Calcite | Calcite |
| | | Concentration en minéral sec (%) | 100 | 65 | 60 | 65 | 65 | 65 | 68 |
| | | Diamètre médian (µm) | 100 | 1,5 | 2,0 | 1,7 | 1,8 | 2,2 | 1,9 |
| | | Surface spécifique (m²/g) | - | 5,5 | 6,34 | 7,98 | 7,66 | 5,94 | 7,22 |
| | Dispersant | Nature | - | C * | B * | B * | C * | D * | C * |
| | | Quantité sec/sec (%) | - | 0,13 | 0,10 | 0,13 | 0,13 | 0,13 | 0,15 |
| | Agent anti-sédimentation | Nature | - | - | - | - | - | - | - |
| **SUSPENSION** | | Quantité sec/sec (%) | 0 | 0 | 0 | 0 | 0 | 0 | 0 |
| | Autres Additifs | Colorant (%) | 0 | 0 | 0 | 0 | 0 | 0 | 0 |
| | | Bactéricide (%) | 0 | 0 | 0 | 0 | 0 | 0 | 0 |
| | | Anti-évaporation (%) | 0 | 0 | 0 | 0 | 0 | 0 | 0 |
| | | Antigel (%) | 0 | 0 | 0 | 0 | 0 | 0 | 0 |
| **PROPRIETES** | Propriétés | Viscosité (cP) à 100 t/min | - | 250 | 200 | 300 | 250 | 330 | 500 |
| | | Solubilité carbonique (%) | 60 | 90 | 90 | 95 | 95 | 90 | 95 |
| **SUSPENSION** | | Réactivité agronomique (%) à x mois | 50 | 90 | 90 | 95 | 95 | 90 | 95 |
| | | | 6 mois | 3 mois | 3 mois | 3 mois | 3 mois | 3 mois | 3 mois |
| | | Dose (t/ha) | 2 | 2 | 2 | 2 | 2 | 2 | 2 |

* A : Copolymère acide acrylique, méthacrylate de méthyle, phosphate de méthacrylate d'éthylène glycol
* B : Polyacrylate de sodium
* C : Polyacrylate mixte de calcium et sodium
* D : Polyacrylate mixte de magnésium et sodium
* E : Polyacrylate d'ammonium
* F : Copolymère acrylique contenant un ester d'acide gras oxyéthylé

## - TABLEAU 2 -

| | Essai n° | 11 | 12 | 13 | 14 | 15 | 16 |
|---|---|---|---|---|---|---|---|
| | | | | Invention | | | |
| **COMPOSITION** Minéral | Nature minéral | Dolomie | Dolomie | 2/3 CaCO₃ + 1/3 Dolomie | MgO | Craie | Craie |
| | Concentration en minéral sec (%) | 40 | 50 | 70 | 40 | 65 | 65 |
| | Diamètre médian (µm) | 2,9 | 4,0 | 2,3 | 2,3 | 1,6 | 1,6 |
| | Surface spécifique (m²/g) | - | - | - | - | 5,5 | 5,5 |
| Dispersant | Nature | B * | A * | B * | B * | B * | E * |
| | Quantité sec/sec (%) | 1,00 | 1,00 | 1,00 | 1,00 | 0,13 | 0,13 |
| Agent anti-sédimentation | Nature | - | - | - | - | F * | - |
| **SUSPENSION** | Quantité sec/sec (%) | 0 | 0 | 0 | 0 | 0,015 | 0 |
| Autres Additifs | Colorant (%) | 0 | 0 | 0 | 0 | 0 | 0 |
| | Bactéricide (%) | 0 | 0 | 0 | 0 | 0 | 0,020 |
| | Anti-évaporation (%) | 0 | 0 | 0 | 0 | 0 | 0 |
| | Antigel (%) | 0 | 0 | 0 | 0 | 0 | 0 |
| **PROPRIETES** Propriétés | Viscosité (cP) à 100 t/min | 430 | 600 | 530 | 470 | 260 | 200 |
| | Solubilité carbonique (%) | 65 | 60 | 75 | - | 90 | 90 |
| | Réactivité agronomique (%) à x mois | 65 3 mois | 60 3 mois | 75 3 mois | 95 3 mois | 90 3 mois | 90 3 mois |
| **SUSPENSION** | Dose (t/ha) | 2 | 2 | 2 | 2 | 2 | 2 |

* A : Copolymère acide acrylique, méthacrylate de méthyle, phosphate de méthacrylate d'éthylène glycol

* B : Polyacrylate de sodium

* C : Polyacrylate mixte de calcium et sodium

* D : Polyacrylate mixte de magnésium et sodium

* E : Polyacrylate d'ammonium

* F : Copolymère acrylique contenant un ester d'acide gras oxyéthylé

- TABLEAU 2 -

EP 0 924 176 B1

| | | | Invention | Invention | Invention |
|---|---|---|---|---|---|
| **COMPOSITION** | **Minéral** | Essai n° | 17 | 18 | 19 |
| | | Nature minéral | Craie | Craie | Craie |
| | | Concentration en minéral sec (%) | 65 | 65 | 65 |
| | | Diamètre médian (µm) | 1,6 | 1,6 | 1,6 |
| | | Surface spécifique (m$^2$/g) | 5,5 | 5,5 | 5,5 |
| | **Dispersant** | Nature | E * | B * | B * |
| | | Quantité sec/sec (%) | 0,13 | 0,13 | 0,13 |
| **SUSPENSION** | **Agent anti-sédimentation** | Nature | - | - | - |
| | | Quantité sec/sec (%) | 0 | 0 | 0 |
| | **Autres Additifs** | Colorant (%) | 0 | 0 | 0 |
| | | Bactéricide (%) | 0,03 | 0 | 0,020 |
| | | Anti-évaporation (%) | 0 | 0 | 2 |
| | | Antigel (%) | 0 | 4 | 2 |
| **PROPRIETES** **SUSPENSION** | **Propriétés** | Viscosité (cP) à 100 t/min | 200 | 180 | 180 |
| | | Solubilité carbonique (%) | 90 | 90 | 90 |
| | | Réactivité agronomique (%) à x mois | 90 3 mois | 90 3 mois | 90 3 mois |
| | | Dose (t/ha) | 2 | 2 | 2 |

* A : Copolymère acide acrylique, méthacrylate de méthyle, phosphate de méthacrylate d'éthylène glycol
* B : Polyacrylate de sodium
* C : Polyacrylate mixte de calcium et sodium
* D : Polyacrylate mixte de magnésium et sodium
* E : Polyacrylate d'ammonium
* F : Copolymère acrylique contenant un ester d'acide gras oxyéthylé

La dose d'emploi des essais est de 2 t/ha.

L'invention conceme également les dispersions de matières minérales destinées à l'utilisation pour des amendements basiques pour les sols, telles que définies dans la présente demande.

L'invention concerne encore l'utilisation des amendements pour le sol dans le but de réguler le pH de la masse des sols et/ou d'améliorer la stabilité structurale des sols.

**Revendications**

1. Utilisation, dans le but d'améliorer l' « efficacité » ou « réactivité agronomique » c'est-à-dire le rapport A entre l'évolution mesurée du calcium assimilé par le sol, c'est-à-dire échangeable, et l'évolution attendue du calcium, selon la formule suivante :

$$A = 100 \times \frac{\text{(ppm de Cao échangeable final - ppm de Cao échangeable initial)}}{\text{ppm de Cao attendu selon la dose apportée}}$$

d'un amendement basique liquide pour les sols, du type comportant une suspension de matière minérale, selon laquelle on applique sur le sol une suspension aqueuse de carbonate de calcium ou de dolomie ou de leurs mélanges ou bien encore d'oxyde de magnésium extrêmement fin, de granulométrie correspondant à un diamètre médian de particule de moins de 10 microns.

2. Utilisation d'amendement basique liquide selon la revendication 1, **caractérisée en ce que** le diamètre médian de la matière minérale est inférieur à 7 microns.

3. Utilisation d'amendement basique liquide selon la revendication 1 ou 2, **caractérisée en ce que** le diamètre médian de la matière minérale est inférieur à 5 microns.

4. Utilisation d'amendement basique liquide selon l'une quelconque des revendications 1 à 3, **caractérisée en ce que** le diamètre médian de la matière minérale est inférieur à 3 microns.

5. Utilisation d'amendement basique liquide selon l'une quelconque des revendications 1 à 4, **caractérisée en ce qu'**elle comprend de plus un ou plusieurs additifs choisis parmi $MgCO_3$, les sulfates alcalins ou alcalino-terreux, des sels de potassium, et autres additifs.

6. Utilisation d'amendement basique liquide selon l'une quelconque des revendications 1 à 5, **caractérisée en ce qu'**elle comprend de plus un agent dispersant et/ou un agent anti-sédimentation.

7. Utilisation d'amendement basique liquide selon la revendication 6, **caractérisée en ce que** ledit agent dispersant est choisi parmi les polymères et copolymères (méth)acryliques et leurs sels, notamment les sels sodiques, les sels mixtes de calcium et de sodium, ou de magnésium et de sodium, les sels d'ammonium, ainsi que leurs phosphates.

8. Utilisation d'amendement basique liquide selon la revendication 6 ou 7, **caractérisée en ce que** ledit agent anti-sédimentation est choisi parmi les épaississants naturels ou les épaississants synthétiques tels que les copolymères (méth)acryliques associatifs ou non.

9. Utilisation d'amendement basique liquide selon l'une quelconque des revendications 1 à 8, **caractérisée en ce qu'**elle comprend de plus au moins un additif choisi parmi les agents colorants, fertilisants, anti-évaporation, antigel, bactéricides.

10. Utilisation d'amendement basique liquide selon l'une quelconque des revendications 1 à 9, **caractérisée en ce que** le carbonate de calcium est choisi parmi la craie, la calcite, le marbre et toute autre forme naturelle du carbonate de calcium.

11. Utilisation d'amendement basique liquide selon l'une quelconque des revendications 1 à 10, **caractérisée en ce qu'**elle contient :

65 % en matière sèche de craie de diamètre médian 1,5 microns, de surface spécifique 5,5 m$^2$/g,

0,13 % en matière sèche d'un dispersant du type polyacrylate mixte de calcium et de sodium,

le complément à 100 % étant de l'eau.

**12.** Utilisation d'amendement basique liquide selon l'une quelconque des revendications 1 à 10, **caractérisée en ce qu'**elle contient :

60 % en matière sèche de calcite de diamètre médian 2 microns, de surface spécifique 6,34 $m^2$/g,

0,10 % en matière sèche d'un dispersant du type polyacrylate de sodium,

le complément à 100 % étant de l'eau.

**13.** Utilisation d'amendement basique liquide selon l'une quelconque des revendications 1 à 10, **caractérisée en ce qu'**elle contient :

65 % en matière sèche de calcite de diamètre médian 1,7 microns, de surface spécifique 7,98 $m^2$/g,

0,13 % en matière sèche d'un dispersant du type polyacrylate de sodium,

le complément à 100 % étant de l'eau.

**14.** Utilisation d'amendement basique liquide selon l'une quelconque des revendications 1 à 10, **caractérisée en ce qu'**elle continent :

65 % en matière sèche de calcite de diamètre médian 1,8 microns, de surface spécifique 7,66 $m^2$/g,

0,13 % en matière sèche d'un dispersant du type polyacrylate mixte de calcium et de sodium,

le complément à 100 % étant de l'eau.

**15.** Utilisation d'amendement basique liquide selon l'une quelconque des revendications 1 à 10, **caractérisée en ce qu'**elle contient :

65 % en matière sèche de calcite de diamètre médian 2,2 microns, de surface spécifique 5,94 $m^2$/g,

0,13 % en matière sèche d'un dispersant du type polyacrylate mixte de magnésium et de sodium,

le complément à 100 % étant de l'eau.

**16.** Utilisation d'amendement basique liquide selon l'une quelconque des revendications 1 à 10, **caractérisée en ce qu'**elle contient :

68 % en matière sèche de calcite de diamètre médian 1,9 microns, de surface spécifique 7,22 $m^2$/g,

0,15 % en matière sèche d'un dispersant du type polyacrylate mixte de calcium et de sodium,

le complément à 100 % étant de l'eau

**17.** Utilisation d'amendement basique liquide selon l'une quelconque des revendications 1 à 10, **caractérisée en ce qu'**elle contient :

65 % en matière sèche de craie de diamètre médian 1,6 microns, de surface spécifique 5,5 $m^2$/g,

0,13 % en matière sèche d'un dispersant du type polyacrylate de sodium,

0,015 % en matière sèche d'un agent épaississant ou anti-sédimentation du type copolymère acrylique contenant un ester d'acide gras oxyéthylé,

le complément à 100 % étant de l'eau

18. Utilisation d'amendement basique liquide selon l'une quelconque des revendications 1 à 10, **caractérisée en ce qu'**elle contient :

65 % en matière sèche de craie de diamètre médian 1,6 microns, de surface spécifique 5,5 m$^2$/g,

0,13 % en matière sèche d'un dispersant du type polyacrylate d'ammonium,

0,020 % d'un bactéricide,

le complément à 100 % étant de l'eau.

19. Utilisation d'amendement basique liquide selon l'une quelconque des revendications 1 à 10, **caractérisée en ce qu'**elle contient :

65 % en matière sèche de craie de diamètre médian 1,6 microns, de surface spécifique 5,5 m$^2$/g,

0,13 % en matière sèche d'un dispersant du type polyacrylate d'ammonium,

0,030 % d'un bactéricide,

le complément à 100 % étant de l'eau.

20. Utilisation d'amendement basique liquide selon l'une quelconque des revendications 1 à 10, caraclérisée en ce qu'elle contient :

65 % en matière sèche de craie de diamètre médian 1,6 microns, de surface spécifique 5,5 m$^2$/g,

0,13 % en matière sèche d'un dispersant du type polyacrylate de sodium

4 % d'un agent anti-gel,

le complément à 100 % étant de l'eau.

21. Utilisation d'amendement basique liquide selon l'une quelconque des revendications 1 à 10, **caractérisée en ce qu'**elle contient :

65 % en matière sèche de craie de diamètre médian 1,6 microns, de surface spécifique 5,5 m$^2$/g,

0,13 % en matière sèche d'un dispersant du type polyacrylate de sodium,

0,020 % d'un bactéricide,

2,0 % d'un agent anti-évaporation,

2,0 % d'un agent anti-gel,

le complément à 100 % étant de l'eau.

22. Utilisation d'amendement basique liquide selon l'une quelconque des revendications 1 à 9, **caractérisée en ce qu'**elle contient :

40 % en matière sèche de dolomie de diamètre médian 2,9 microns,

1,00 % en matière sèche d'un dispersant du type polyacrylate de sodium,

le complément à 100 % étant de l'eau.

**23.** Utilisation d'amendement basique liquide selon l'une quelconque des revendications 1 à 9, **caractérisée en ce qu'**elle contient :

50 % en matière sèche de dolomie de diamètre médian 4,0 microns,

1,00 % en matière sèche d'un dispersant du type copolymère acide acrylique, méthacrylate de méthyle, phosphate de méthacrylate d'éthylène glycol,

le complément à 100 % étant de l'eau.

**24.** Utilisation d'amendement basique liquide selon l'une quelconque des revendications 1 à 9, **caractérisée en ce qu'**elle contient :

70 % en matière sèche d'un mélange 2/3 de carbonate de calcium et 1/3 de dolomie de diamètre médian 2,3 microns,

1,00 % en matière sèche d'un dispersant du type polyacrylate de sodium,

le complément à 100 % étant de l'eau.

**25.** Utilisation d'amendement basique liquide selon l'une quelconque des revendications 1 à 9, **caractérisée en ce qu'**elle contient :

40 % en matière sèche d'oxyde de magnésium de diamètre médian 2,3 microns,

1,00 % en matière sèche d'un dispersant du type polyacrylate de sodium,

le complément à 100 % étant de l'eau.

**26.** Utilisation d'amendement basique liquide selon l'une quelconque des revendications 1 à 21, **caractérisée en ce qu'**elle présente les propriétés agronomiques suivantes :

les particules de carbonate de calcium ont un diamètre médian inférieur à 10 microns,

une réactivité agronomique d'au moins 90 % à 3 mois,

une solubilité carbonique d'au moins 90.

**27.** Utilisation d'amendement basique liquide selon l'une quelconque des revendications 1 à 9 et 22 à 23, **caractérisée en ce qu'**elle présente les propriétés agronomiques suivantes :

les particules de dolomie ont un diamètre médian inférieur à 10 microns,

une réactivité agronomique d'au moins 60 % à 3 mois,

une solubilité carbonique d'au moins 60.

**28.** Utilisation d'amendement basique liquide selon l'une quelconque des revendications 1 à 9 et 24, **caractérisée en ce qu'**elle présente les propriétés agronomiques suivantes :

les particules du mélange de carbonate de calcium et de dolomie ont un diamètre médian inférieur à 10 microns,

une réactivité agronomique d'au moins 60 % à 3 mois,

une solubilité carbonique d'au moins 60.

**29.** Utilisation d'amendement basique liquide selon l'une quelconque des revendications 1 à 28, **caractérisée en ce**

**qu'**elle est associée à du lisier.

30. Utilisation d'amendement basique liquide pour le sol, selon l'une quelconque des revendications 1 à 29, en association avec d'autres produits pour épandage comme des engrais, de l'eau d'irrigation, des pesticides et autres.

31. Utilisation de la composition d'amendement basique liquide selon l'une quelconque des revendications 1 à 30 pour réguler le pH de la masse des sols et/ou pour améliorer la stabilité structurale des sols.

32. Dispersion de matière minérale pour amendement basique pour les sols, telle que définie dans l'une quelconque des revendicadons 1 à 30.

33. Utilisation des dispersions selon la revendication 32, comme composant d'amendement basique liquide pour les sols et pour réguler le pH de la masse des sols et/ou pour améliorer la stabilité structurale des sols.


**Patentansprüche**

1. Verwendung eines flüssigen basischen Bodenverbesserungsmittels vom Typ, welcher eine Suspension eines mineralischen Materials umfaßt, zur Verbesserung der "Wirksamkeit" oder "landwirtschaftlichen Reaktivität", d. h. des Verhältnisses A zwischen der gemessenen Veränderung des vom Boden assimilierten, d.h. austauschbaren, Calciums und der erwarteten Veränderung von Calcium gemäß der folgenden Formel:

$$A = 100 \times \frac{\text{(ppm austauschbares CaO am Ende - ppm austauschbares CaO am Anfang)}}{\text{erwartete ppm CaO gemäß aufgebrachter Dosis}}$$

wobei auf den Boden eine wäßrige Suspension von Calciumcarbonat oder Dolomit oder deren Gemischen oder äußerst feinem Magnesiumoxid in einer Korngröße, die einem mittleren Teilchendurchmesser von weniger als 10 Mikron entspricht, aufgebracht wird.

2. Verwendung des flüssigen basischen Verbesserungsmittels nach Anspruch 1, **dadurch gekennzeichnet, daß** der mittlere Durchmesser des mineralischen Materials weniger als 7 Mikron beträgt.

3. Verwendung des flüssigen basischen Verbesserungsmittels nach Anspruch 1 oder 2, **dadurch gekennzeichnet, daß** der mittlere Durchmesser des mineralischen Materials weniger als 5 Mikron beträgt.

4. Verwendung des flüssigen basischen Verbesserungsmittels nach einem der Ansprüche 1 bis 3, **dadurch gekennzeichnet, daß** der mittlere Durchmesser des mineralischen Materials weniger als 3 Mikron beträgt.

5. Verwendung des flüssigen basischen Verbesserungsmittels nach einem der Ansprüche 1 bis 4, **dadurch gekennzeichnet, daß** es weiterhin ein oder mehrere Additive enthält, die aus $MgCO_3$, Alkali- oder Erdalkalisulfaten, Kaliumsalzen und anderen Additiven ausgewählt sind.

6. Verwendung des flüssigen basischen Verbesserungsmittels nach einem der Ansprüche 1 bis 5, **dadurch gekennzeichnet, daß** es weiterhin ein Dispergiermittel und/oder ein Antisedimentationsmittel umfaßt.

7. Verwendung des flüssigen basischen Verbesserungsmittels nach Anspruch 6, **dadurch gekennzeichnet, daß** das Dispergiermittel aus (Meth)acrylpolymeren und - copolymeren und deren Salzen, insbesondere Natriumsalzen, Mischsalzen von Calcium und Natrium oder von Magnesium und Natrium, Ammoniumsalzen sowie deren Phosphaten ausgewählt ist.

8. Verwendung des flüssigen basischen Verbesserungsmittels nach Anspruch 6 oder 7, **dadurch gekennzeichnet, daß** das Antisedimentationsmittel aus natürlichen oder synthetischen Verdickungsmitteln, wie assoziierenden oder nicht-assoziierenden (Meth)acrylcopolymeren, ausgewählt ist.

9. Verwendung des flüssigen basischen Verbesserungsmittels nach einem der Ansprüche 1 bis 8, **dadurch gekennzeichnet, daß** es weiterhin mindestens ein Additiv, ausgewählt aus Färbemitteln, Düngemitteln, Antiverdunstungsmitteln, Antigelbildungsmitteln und Bakteriziden, umfaßt.

**10.** Verwendung des flüssigen basischen Verbesserungsmittels nach einem der Ansprüche 1 bis 9, **dadurch gekennzeichnet, daß** das Calciumcarbonat aus Kreide, Calcit, Marmor und jeder anderen natürlichen Form von Calciumcarbonat ausgewählt ist.

**11.** Verwendung des flüssigen basischen Verbesserungsmittels nach einem der Ansprüche 1 bis 10, **dadurch gekennzeichnet, daß** es enthält:

65%, bezogen auf die Trockenmasse, Kreide mit einem mittleren Durchmesser von 1,5 Mikron und einer spezifischen Oberfläche von 5,5 m$^2$/g, und
0,13%, bezogen auf die Trockenmasse, eines Dispergiermittels vom Calcium- und Natriummischpolyacrylat-Typ,
und wobei der Rest, um 100% zu ergeben, Wasser ist.

**12.** Verwendung des flüssigen basischen Verbesserungsmittels nach einem der Ansprüche 1 bis 10, **dadurch gekennzeichnet, daß** es enthält:

60%, bezogen auf die Trockenmasse, Calcit mit einem mittleren Durchmesser von 2 Mikron und einer spezifischen Oberfläche von 6,34 m$^2$/g, und
0,10%, bezogen auf die Trockenmasse, eines Dispergiermittels vom Natriumpolyacrylat-Typ,
und wobei der Rest, um 100% zu ergeben, Wasser ist.

**13.** Verwendung des flüssigen basischen Verbesserungsmittels nach einem der Ansprüche 1 bis 10, **dadurch gekennzeichnet, daß** es enthält:

65%, bezogen auf die Trockenmasse, Calcit mit einem mittleren Durchmesser von 1,7 Mikron und einer spezifischen Oberfläche von 7,98 m$^2$/g, und
0,13%, bezogen auf die Trockenmasse, eines Dispergiermittels vom Natriumpolyacrylat-Typ,
und wobei der Rest, um 100% zu ergeben, Wasser ist.

**14.** Verwendung des flüssigen basischen Verbesserungsmittels nach einem der Ansprüche 1 bis 10, **dadurch gekennzeichnet, daß** es enthält:

65%, bezogen auf die Trockenmasse, Calcit mit einem mittleren Durchmesser von 1,8 Mikron und einer spezifischen Oberfläche von 7,66 m$^2$/g, und
0,13%, bezogen auf die Trockenmasse, eines Dispergiermittels vom Calcium- und Natriummischpolyacrylat-Typ,
und wobei der Rest, um 100% zu ergeben, Wasser ist.

**15.** Verwendung des flüssigen basischen Verbesserungsmittels nach einem der Ansprüche 1 bis 10, **dadurch gekennzeichnet, daß** es enthält:

65%, bezogen auf die Trockenmasse, Calcit mit einem mittleren Durchmesser von 2,2 Mikron und einer spezifischen Oberfläche von 5,94 m$^2$/g, und
0,13%, bezogen auf die Trockenmasse, eines Dispergiermittels vom Magnesium- und Natriummischpolyacrylat-Typ,
und wobei der Rest, um 100% zu ergeben, Wasser ist.

**16.** Verwendung des flüssigen basischen Verbesserungsmittels nach einem der Ansprüche 1 bis 10, **dadurch gekennzeichnet, daß** es enthält:

68%, bezogen auf die Trockenmasse, Calcit mit einem mittleren Durchmesser von 1,9 Mikron und einer spezifischen Oberfläche von 7,22 m$^2$/g, und
0,15%, bezogen auf die Trockenmasse, eines Dispergiermittels vom Calcium- und Natriummischpolyacrylat-Typ,
und wobei der Rest, um 100% zu ergeben, Wasser ist.

**17.** Verwendung des flüssigen basischen Verbesserungsmittels nach einem der Ansprüche 1 bis 10, **dadurch gekennzeichnet, daß** es enthält:

65%, bezogen auf die Trockenmasse, Kreide mit einem mittleren Durchmesser von 1,6 Mikron und einer spezifischen Oberfläche von 5,5 $m^2/g$,

0,13%, bezogen auf die Trockenmasse, eines Dispergiermittels vom Natriumpolyacrylat-Typ, und

0,015%, bezogen auf die Trockenmasse, eines Verdickungsmittels oder Antisedimentationsmittels vom Acrylcopolymer-Typ, das einen ethoxylierten Fettsäureester enthält,

und wobei der Rest, um 100% zu ergeben, Wasser ist.

18. Verwendung des flüssigen basischen Verbesserungsmittels nach einem der Ansprüche 1 bis 10, **dadurch gekennzeichnet, daß** es enthält:

65%, bezogen auf die Trockenmasse, Kreide mit einem mittleren Durchmesser von 1,6 Mikron und einer spezifischen Oberfläche von 5,5 $m^2/g$,

0,13%, bezogen auf die Trockenmasse, eines Dispergiermittels vom Ammoniumpolyacrylat-Typ, und

0,020% eines Bakterizids,

und wobei der Rest, um 100% zu ergeben, Wasser ist.

19. Verwendung des flüssigen basischen Verbesserungsmittels nach einem der Ansprüche 1 bis 10, **dadurch gekennzeichnet, daß** es enthält:

65%, bezogen auf die Trockenmasse, Kreide mit einem mittleren Durchmesser von 1,6 Mikron und einer spezifischen Oberfläche von 5,5 $m^2/g$,

0,13%, bezogen auf die Trockenmasse, eines Dispergiermittels vom Ammoniumpolyacrylat-Typ, und

0,030% eines Bakterizids,

und wobei der Rest, um 100% zu ergeben, Wasser ist.

20. Verwendung des flüssigen basischen Verbesserungsmittels nach einem der Ansprüche 1 bis 10, **dadurch gekennzeichnet, daß** es enthält:

65%, bezogen auf die Trockenmasse, Kreide mit einem mittleren Durchmesser von 1,6 Mikron und einer spezifischen Oberfläche von 5,5 $m^2/g$,

0,13%, bezogen auf die Trockenmasse, eines Dispergiermittels vom Natriumpolyacrylat-Typ, und

4% eines Antigelbildungsmittels,

und wobei der Rest, um 100% zu ergeben, Wasser ist.

21. Verwendung des flüssigen basischen Verbesserungsmittels nach einem der Ansprüche 1 bis 10, **dadurch gekennzeichnet, daß** es enthält:

65%, bezogen auf die Trockenmasse, Kreide mit einem mittleren Durchmesser von 1,6 Mikron und einer spezifischen Oberfläche von 5,5 $m^2/g$,

0,13%, bezogen auf die Trockenmasse, eines Dispergiermittels vom Natriumpolyacrylat-Typ,

0,020% eines Bakterizids,

2,0% eines Antiverdunstungsmittels, und

2,0% eines Antigelbildungsmittels,

und wobei der Rest, um 100% zu ergeben, Wasser ist.

22. Verwendung des flüssigen basischen Verbesserungsmittels nach einem der Ansprüche 1 bis 9, **dadurch gekennzeichnet, daß** es enthält:

40%, bezogen auf die Trockenmasse, Dolomit mit einem mittleren Durchmesser von 2,9 Mikron, und

1,00%, bezogen auf die Trockenmasse, eines Dispergiermittels vom Natriumpolyacrylat-Typ,

und wobei der Rest, um 100% zu ergeben, Wasser ist.

23. Verwendung des flüssigen basischen Verbesserungsmittels nach einem der Ansprüche 1 bis 9, **dadurch gekennzeichnet, daß** es enthält:

50%, bezogen auf die Trockenmasse, Dolomit mit einem mittleren Durchmesser von 4,0 Mikron, und

1,00%, bezogen auf die Trockenmasse, eines Dispergiermittels vom Acrylsäure/Methylmethacrylat/Ethylenglycolmethacrylatphosphat-Copolymertyp,

und wobei der Rest, um 100% zu ergeben, Wasser ist.

24. Verwendung des flüssigen basischen Verbesserungsmittels nach einem der Ansprüche 1 bis 9, **dadurch gekennzeichnet, daß** es enthält:

70%, bezogen auf die Trockenmasse, eines Gemischs von zwei Dritteln Calciumcarbonat und einem Drittel Dolomit mit einem mittleren Durchmesser von 2,3 Mikron, und
1,00%, bezogen auf die Trockenmasse, eines Dispergiermittels vom Natriumpolyacrylat-Typ,
und wobei der Rest, um 100% zu ergeben, Wasser ist.

25. Verwendung des flüssigen basischen Verbesserungsmittels nach einem der Ansprüche 1 bis 9, **dadurch gekennzeichnet, daß** es enthält:

40%, bezogen auf die Trockenmasse, Magnesiumoxid mit einem mittleren Durchmesser von 2,3 Mikron, und
1,00%, bezogen auf die Trockenmasse, eines Dispergiermittels vom Natriumpolyacrylat-Typ,
und wobei der Rest, um 100% zu ergeben, Wasser ist.

26. Verwendung des flüssigen basischen Verbesserungsmittels nach einem der Ansprüche 1 bis 21, **dadurch gekennzeichnet, daß** es die folgenden landwirtschaftlichen Eigenschaften aufweist:

die Calciumcarbonatteilchen haben einen mittleren Durchmesser von weniger als 10 Mikron,
eine landwirtschaftliche Reaktivität von mindestens 90% in 3 Monaten, und
eine Kohlendioxidlöslichkeit von mindestens 90.

27. Verwendung des flüssigen basischen Verbesserungsmittels nach einem der Ansprüche 1 bis 9 und 22 bis 23, **dadurch gekennzeichnet, daß** es die folgenden landwirtschaftlichen Eigenschaften aufweist:

die Dolomitteilchen haben einen mittleren Durchmesser von weniger als 10 Mikron,
eine landwirtschaftliche Reaktivität von mindestens 60% in 3 Monaten, und
eine Kohlendioxidlöslichkeit von mindestens 60.

28. Verwendung des flüssigen basischen Verbesserungsmittels nach einem der Ansprüche 1 bis 9 und 24, **dadurch gekennzeichnet, daß** es die folgenden landwirtschaftlichen Eigenschaften aufweist:

die Teilchen des Gemischs von Calciumcarbonat und Dolomit haben einen mittleren Durchmesser von weniger als 10 Mikron,
eine landwirtschaftliche Reaktivität von mindestens 60% in 3 Monaten, und
eine Kohlendioxidlöslichkeit von mindestens 60.

29. Verwendung des flüssigen basischen Verbesserungsmittels nach einem der Ansprüche 1 bis 28, **dadurch gekennzeichnet, daß** es in Verbindung mit Jauche verwendet wird.

30. Verwendung des flüssigen basischen Bodenverbesserungsmittels nach einem der Ansprüche 1 bis 29 in Verbindung mit anderen Produkten zum Ausbringen, wie Düngemitteln, Wasser zur Bewässerung, Pestiziden und anderen.

31. Verwendung der flüssigen basischen Verbesserungsmittel-Zusammensetzung nach einem der Ansprüche 1 bis 30 zur Regulierung des pH des Bodenkörpers und/oder Verbesserung der strukturellen Stabilität von Böden.

32. Dispersion von mineralischem Material für ein basisches Bodenverbesserungsmittel wie in einem der Ansprüche 1 bis 30 definiert.

33. Verwendung von Dispersionen nach Anspruch 32 als Verbindung für ein flüssiges basisches Bodenverbesserungsmittel und zur Regulierung des pH des Bodenkörpers und/oder zur Verbesserung der strukturellen Stabilität von Böden.

**Claims**

1. The use, with the aim of improving the "effectiveness" or "agronomic reactivity", that is to say the ratio A between the measured evolution of the calcium assimilated by the ground, that is to say which is exchangeable, and the expected evolution of the calcium, in accordance with the following formula:

$$A = 100 \times \frac{\text{(ppm of final exchangeable CaO - ppm of initial exchangeable CaO)}}{\text{ppm of CaO expected according to the metered quantity supplied}}$$

of a liquid basic amendment for soils, of the type comprising a suspension of mineral material, in which an aqueous suspension of calcium carbonate or of dolomite or of mixtures thereof or alternatively also of extremely fine magnesium oxide, of a grain size corresponding to a median diameter of the particles of less than 10 microns, is applied to the soil.

2. The use of a liquid basic amendment according to Claim 1, **characterised in that** the median diameter of the mineral material is less than 7 microns.

3. The use of a liquid basic amendment according to Claim 1 or 2, **characterised in that** the median diameter of the mineral material is less than 5 microns.

4. The use of a liquid basic amendment according to any one of Claims 1 to 3, **characterised in that** the median diameter of the mineral material is less than 3 microns.

5. The use of a liquid basic amendment according to any one of Claims 1 to 4, **characterised in that** it furthermore comprises one or more additives selected from among $MgCO_3$, alkali or alkaline-earth sulphates, potassium salts, and other additives.

6. The use of a liquid basic amendment according to any one of Claims 1 to 5, **characterised in that** it furthermore comprises a dispersing agent and/or an anti-sedimentation agent.

7. The use of a liquid basic amendment according to Claim 6, **characterised in that** said dispersing agent is selected from among (meth)acrylic polymers and copolymers and their salts, in particular sodium salts, mixed calcium and sodium, or magnesium and sodium, salts, ammonium salts, and also phosphates thereof.

8. The use of a liquid basic amendment according to Claim 6 or 7, **characterised in that** said anti-sedimentation agent is selected from among natural thickening agents or synthetic thickening agents such as (meth)acrylic copolymers, whether associative or not.

9. The use of a liquid basic amendment according to any one of Claims 1 to 8, **characterised in that** it furthermore comprises at least one additive selected from among colouring agents, fertilising agents, anti-evaporation agents, anti-freezing agents and bactericides.

10. The use of a liquid basic amendment according to any one of Claims 1 to 9, **characterised in that** the calcium carbonate is selected from among chalk, calcite, marble and any other natural forms of calcium carbonate.

11. The use of a liquid basic amendment according to any one of Claims 1 to 10, **characterised in that** it contains:

    65% as dry matter of chalk of a median diameter of 1.5 microns, of a specific surface area of 5.5 $m^2$/g,

    0.13% as dry matter of a dispersing agent of the mixed calcium and sodium polyacrylate type,

    being made up to 100% with water.

12. The use of a liquid basic amendment according to any one of Claims 1 to 10, **characterised in that** it contains:

    60% as dry matter of calcite of a median diameter of 2 microns, of a specific surface area of 6.34 $m^2$/g,

    0.10% as dry matter of a dispersing agent of the sodium polyacrylate type,

being made up to 100% with water.

**13.** The use of a liquid basic amendment according to any one of Claims 1 to 10, **characterised in that** it contains:

65% as dry matter of calcite of a median diameter of 1.7 microns, of a specific surface area of 7.98 m$^2$/g,

0.13% as dry matter of a dispersing agent of the sodium polyacrylate type,

being made up to 100% with water.

**14.** The use of a liquid basic amendment according to any one of Claims 1 to 10, **characterised in that** it contains:

65% as dry matter of calcite of a median diameter of 1.8 microns, of a specific surface area of 7.66 m$^2$/g,

0.13% as dry matter of a dispersing agent of the mixed calcium and sodium polyacrylate type,

being made up to 100% with water.

**15.** The use of a liquid basic amendment according to any one of Claims 1 to 10, **characterised in that** it contains:

65% as dry matter of calcite of a median diameter of 2.2 microns, of a specific surface area of 5.94 m$^2$/g,

0.13% as dry matter of a dispersing agent of the mixed magnesium and sodium polyacrylate type,

being made up to 100% with water.

**16.** The use of a liquid basic amendment according to any one of Claims 1 to 10, **characterised in that** it contains:

68% as dry matter of calcite of a median diameter of 1.9 microns, of a specific surface area of 7.22 m$^2$/g,

0.15% as dry matter of a dispersing agent of the mixed calcium and sodium polyacrylate type,

being made up to 100% with water.

**17.** The use of a liquid basic amendment according to any one of Claims 1 to 10, **characterised in that** it contains:

65% as dry matter of chalk of a median diameter of 1.6 microns, of a specific surface area of 5.5 m$^2$/g,

0.13% as dry matter of a dispersing agent of the sodium polyacrylate type,

0.015% as dry matter of a thickening or anti-sedimentation agent of the acrylic copolymer type containing an oxyethylated fatty acid ester,

being made up to 100% with water.

**18.** The use of a liquid basic amendment according to any one of Claims 1 to 10, **characterised in that** it contains:

65% as dry matter of chalk of a median diameter of 1.6 microns, of a specific surface area of 5.5 m$^2$/g,

0.13% as dry matter of a dispersing agent of the ammonium polyacrylate type,

0.020% of a bactericide,

being made up to 100% with water.

**19.** The use of a liquid basic amendment according to any one of Claims 1 to 10, **characterised in that** it contains:

65% as dry matter of chalk of a median diameter of 1.6 microns, of a specific surface area of 5.5 m$^2$/g,

0.13% as dry matter of a dispersing agent of the ammonium polyacrylate type,

0.030% of a bactericide,

being made up to 100% with water.

20. The use of a liquid basic amendment according to any one of Claims 1 to 10, **characterised in that** it contains:

65% as dry matter of chalk of a median diameter of 1.6 microns, of a specific surface area of 5.5 m$^2$/g,

0.13% as dry matter of a dispersing agent of the sodium polyacrylate type,

4% of an anti-freezing agent,

being made up to 100% with water.

21. The use of a liquid basic amendment according to any one of Claims 1 to 10, **characterised in that** it contains:

65% as dry matter of chalk of a median diameter of 1.6 microns, of a specific surface area of 5.5 m$^2$/g,

0.13% as dry matter of a dispersing agent of the sodium polyacrylate type,

0.020% of a bactericide,

2.0% of an anti-evaporation agent,

2.0% of an anti-freezing agent,

being made up to 100% with water.

22. The use of a liquid basic amendment according to any one of Claims 1 to 9, **characterised in that** it contains:

40% as dry matter of dolomite of a median diameter of 2.9 microns,

1.00% as dry matter of a dispersing agent of the sodium polyacrylate type,

being made up to 100% with water.

23. The use of a liquid basic amendment according to any one of Claims 1 to 9, **characterised in that** it contains:

50% as dry matter of dolomite of a median diameter of 4.0 microns,

1.00% as dry matter of a dispersing agent of the type acrylic acid copolymer, methyl methacrylate, ethylene glycol methacrylate phosphate type,

being made up to 100% with water.

24. The use of a liquid basic amendment according to any one of Claims 1 to 9, **characterised in that** it contains:

70% as dry matter of a mixture of 2/3 calcium carbonate and 1/3 dolomite of a median diameter of 2.3 microns,

1.00% as dry matter of a dispersing agent of the sodium polyacrylate type,

being made up to 100% with water.

25. The use of a liquid basic amendment according to any one of Claims 1 to 9, **characterised in that** it contains:

40% as dry matter of magnesium oxide of a median diameter of 2.3 microns,

1.00% as dry matter of a dispersing agent of the sodium polyacrylate type,

being made up to 100% with water.

26. The use of a liquid basic amendment according to any one of Claims 1 to 21, **characterised in that** it has the following agronomic characteristics:

the calcium carbonate particles have a median diameter of less than 10 microns,

an agronomic reactivity of at least 90% at 3 months,

a carbonic solubility of at least 90.

27. The use of a liquid basic amendment according to any one of Claims 1 to 9 and 22 to 23, **characterised in that** it has the following agronomic characteristics:

the dolomite particles have a median diameter of less than 10 microns,

an agronomic reactivity of at least 60% at 3 months,

a carbonic solubility of at least 60.

28. The use of a liquid basic amendment according to any one of Claims 1 to 9 and 24, **characterised in that** it has the following agronomic characteristics:

the particles of the mixture of calcium carbonate and dolomite have a median diameter of less than 10 microns,

an agronomic reactivity of at least 60% at 3 months,

a carbonic solubility of at least 60.

29. The use of a liquid basic amendment according to any one of Claims 1 to 28, **characterised in that** it is associated with liquid manure.

30. The use of a liquid basic amendment for soil according to any one of Claims 1 to 29, in association with other products for spreading such as fertilisers, irrigation water, pesticides and others.

31. The use of the liquid basic amendment composition according to any one of Claims 1 to 30 for regulating the pH of the soil mass and/or for improving the structural stability of soil.

32. A dispersion of material mineral for basic amendment for soils, such as defined in any one of Claims 1 to 30.

33. The use of the dispersions according to Claim 32 as liquid basic amendment component for soils and for regulating the pH of the soil mass and/or for improving the structural stability of soil.

## FIGURE 1 :

Courbe granulométrique moyenne :

EPO - DG 1

11. 12. 1998

Appareil utilisé : Sédigraph 5100

Diamètre des particules en microns